Europäisches Patentamt

European Patent Office

Office européen des brevets

(11) Veröffentlichungsnummer: **0 249 866 B1**

## EUROPÄISCHE PATENTSCHRIFT

(45) Veröffentlichungstag der Patentschrift: **29.01.92**

(51) Int. Cl.⁵: **B29C 47/20**, B29C 47/06

(21) Anmeldenummer: **87108363.0**

(22) Anmeldetag: **10.06.87**

(54) Speicherkopf für die Herstellung mehrschichtiger coextrudierter Schläuche aus Kunststoff.

(30) Priorität: **14.06.86 DE 3620144**

(43) Veröffentlichungstag der Anmeldung:
**23.12.87 Patentblatt 87/52**

(45) Bekanntmachung des Hinweises auf die
Patenterteilung:
**29.01.92 Patentblatt 92/05**

(84) Benannte Vertragsstaaten:
**BE DE ES FR GB IT SE**

(56) Entgegenhaltungen:
DE-A- 2 050 563     DE-A- 2 712 910
DE-A- 2 712 911     DE-A- 3 026 822
FR-A- 2 299 957     FR-A- 2 354 188
US-A- 4 208 178     US-A- 4 297 092
US-A- 4 548 569

(73) Patentinhaber: **BEKUM Maschinenfabriken
GmbH
Lankwitzerstrasse 14/15
W-1000 Berlin 42(DE)**

(72) Erfinder: **Becker, Rudolf, Dipl.-Ing.
Konradenstrasse 32
W-1000 Berlin 47(DE)**

(74) Vertreter: **Huss, Carl-Hans, Dipl.-Ing.
Patentanwalt Griesstrasse 3 a Postfach 14 54
W-8100 Garmisch-Partenkirchen(DE)**

## Beschreibung

Die Erfindung betrifft einen Speicherkopf für die Herstellung mehrschichtiger co-extrudierter Schläuche aus Kunststoff, die als Vorformlinge in geteilten Blasformen weiterverarbeitet werden, mit mehreren koaxial angeordneten, von jeweils einem Extruder gespeisten ringförmigen Speisekanälen, die jeweils eine Schicht des Schlauches bildend, in einem ein Laminat bildenden Ringkanal münden.

Für die Herstellung von Hohlkörpern aus Kunststoff durch Aufblasen eines Vorformlings in einer geteilten Blasform, der in einem von einem Extruder gespeisten Schlauchkopf erzeugt wird, ist das sog. "Co-Extrusionsverfahren" bekannt. Bei diesem ist der im Schlauchkopf geformte und aus dessen Düse ausgestoßene, nach Ablängung den Vorformling für das nachfolgende Blasen bildende Schlauch ein Laminat aus mehreren konzentrisch angeordneten Schichten. Derartige Mehrschicht-Vorformlinge werden für die Herstellung solcher Hohlkörper eingesetzt, deren Füllgut dazu neigt, durch die aus gewöhnlichem, gut verblasbarem Material bestehenden Wände zu diffundieren und/oder diese nachteilige zu beeinflussen, z.B. deren Quellung zu bewirken. Es würde naheliegen, in solchen Fällen für die Herstellung der Behälter ein anderes, nicht durch den Inhalt, z.B. Öle, Fette oder Lösungsmittel, angreifbares Material zu verwenden, aber die Palette dieser Materialien ist klein und sie sind gegenüber den normalen, für die Herstellung im Blasverfahren benutzten Materialien unverhältnismäßig teuer. Der Weg, in solchen Fällen dann eben die Behälter mit entsprechend geringeren Wanddicken herzustellen, ist in den meisten Fällen deshalb nicht gangbar, weil die Behälter eine gewisse Mindestberstfähigkeit, vor allem aber auch Standfestigkeit aufweisen müssen, die nur über eine Mindestwanddicke erreichbar ist. In solchen Fällen schafft das Co-Extrusionsverfahren Abhilfe, bei dem bei der Herstellung später in Form von Vorformlingen benutzter Schläuche eine sehr dünne sog. "Sperrschicht" oder "Barriereschicht" aus einem diffusionsverhindernden und teuren Material beidseitig mit je einer, demgegenüber dickeren sog. "Tragschicht" aus üblichem verblasbaren Material bedeckt wird. Um eine gute Verbindung zwischen der Sperrschicht und der inneren und äußeren Tragschicht zu gewährleisten, werden zwischen die Schichten meist Haftvermittler oder dünne Verbindungsschichten geschaltet, so daß der 5-Schichten-Verbund in der Praxis der übliche ist. Tatsächlich gibt es aber viele, im Rahmen der Erfindung nicht interessierende Abwandlungen, die, z.B. unter Einbeziehung einer oder mehrerer Schichten aus Abfallmaterial, vom 3-Schichten-Verbund bis zum 7-Schichten-Verbund reichen.

Der übliche, in der Blastechnik eingesetzte Schlauchkopf, auch der für die Herstellung co-extrudierter Schläuche, arbeitet kontinuierlich, d.h. das über einen oder mehrere Extruder in den Schlauchkopf kontinuierlich eingespeiste, warmplastische Material wird in diesem zum Schlauch geformt und verläßt die Düse im Maße der Einspeisung ebenfalls kontinuierlich. Diese kontinuierliche Schlauchherstellung versagt bei der Herstellung größerer Hohlkörper, z.B. Behälter, für die dann auch große Vorformlinge benötigt werden. Wenn aus der Düse eines Schlauchkopfes im Durchmesser große Schläuche mit verhältnismäßig großer Masse und dann auch großem Gewicht ausgestoßen werden, bedingt das Gewicht ein zu starkes Längen des warmplastischen Schlauches, das bis zum Abreißen am düsenseitigen Ende führen kann. Deshalb wurde für die Herstellung von größeren Schläuchen der sog "Stau- oder Speicherkopf" entwickelt, der einen Stauraum aufweist, in dem das für die Herstellung eines Vorformlings benötigte Material zunächst gespeichert und dann mit einem Kolben durch die Düse ausgepreßt wird. Das Auspressen des gespeicherten Materials mit einem Kolben kann sehr viel schneller geschehen, als der vom Nachschub durch den Extruder und die Formung zum Schlauch im Kopf zeitlich abhängige kontinuierliche Ausstoß der gleichen Menge und damit die Gefahr des Längens oder evtl. Abreißens des Schlauches vermieden werden.

Wenn ein in den Speicherraum des Schlauchkopfes eintauchender Kolben mit seiner Stirnfläche auf das Material drückt, so hat das bei einem mit nur einem Material gefüllten Speicherraum keine nachteiligen Auswirkungen. Schwierig dagegen wird es, wenn der Stau- oder Speicherraum mit einem beispielsweise 5-Schichten-Laminat gefüllt ist, denn dann darf der Kolben auf die Füllung keinerlei Scherwirkung beim Ausstoßvorgang ausüben, darf die Schichten nicht "verbiegen" oder den Schichtenverbund sonstwie beeinträchtigen.

Bei einem bekannten Schlauchkopf nach der DE-OS 26 04 247 werden die einzelnen, in Ringkanälen erzeugten Schichten jeweils durch einen Ringkolben ausgestoßen und damit koaxial an die das Laminat bildende Zusammenführungsstelle im Schlauchkopf gebracht. Dabei handelt es sich aber nicht eigentlich um einen Speicherkopf, da nicht das gespeicherte Laminat ausgestoßen wird, sondern jede einzelne Schicht von der Laminatbildung bis zu einer Stelle kurz vor der Düse gebracht wird. Außerdem ist diese Konstruktion, die z.B. für ein 5-Schichten-Laminat fünf für sich angetriebene und gesteuerte Ringkolben benötigt, sehr kompliziert.

Demnach lag der Erfindung die Aufgabe zugrunde, einen für das Co-Extrusionsverfahren geeigneten Speicherkopf zu schaffen, der einen aus Schichten bestehenden Schlauch auszustoßen erlaubt, bei dem die Schichten über die gesamte Länge und den gesamten Umfang ihre vorgegebene Lage und Anordnung beibehalten.

Diese Aufgabe löst die Erfindung mit den im Anspruch 1 definierten Mitteln. Weitere vorteilhafte Ausgestaltungen ergeben sich aus den Unteransprüchen.

Die Erfindung ist an zwei Ausführungsbeispielen in den Zeichnungen veranschaulicht und anhand dieser nachfolgend beschrieben. Es stellen dar:

Fig. 1 in verkleinertem Maßstab einen Speicherkopf nach der Erfindung im Vertikalschnitt seiner Füllstellung;

Fig. 2 den Kopf nach Fig. 1 in der Stellung vor dem Ausstoß des im Speicherraum vorhandenen Materials;

Fig. 3 eine weitere Ausführungsform eines erfindungsgemäßen Speicherkopfes im Halbschnitt in der gefüllten Stellung;

Fig. 4 den Kopf nach Fig. 3 in der Stellung nach dem Materialausstoß.

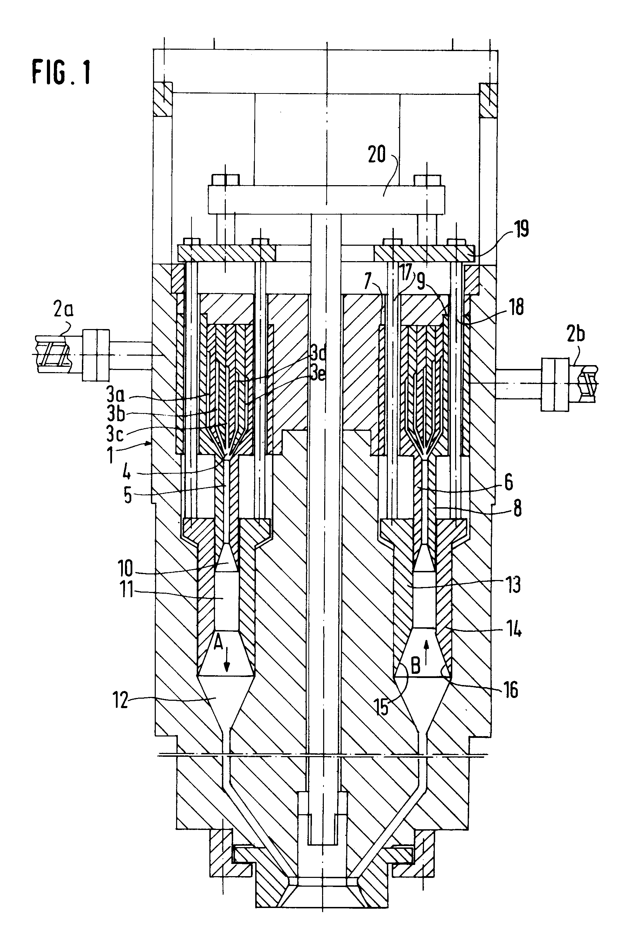

Der in Fig. 1 schematisch und in verkleinertem Maßstab im Vertikalschnitt dargestellte, allgemein mit 1 bezeichnete Schlauchkopf ist zur Herstellung eines aus höchstens fünf Schichten bestehenden Laminats geeignet und kann hierzu von fünf über den Umfang verteilten Extrudern gespeist werden, von denen nur zwei 2a,2b dargestellt sind.

Jeder Extruder speist in bekannter Weise über einen waagerecht verlaufenden, sich in zwei Zweige über den Umfang teilenden Einspeisungskanälen einen der Speisekanäle 3a bis 3e, die bei 4 zusammenlaufen. An dieser Zusammenführungsstelle 4 bildet sich also das Laminat, das dann vereinigt durch den Ringkanal 5 abwärts in Pfeilrichtung A strömt.

Der Ringkanal 5 wird durch die innere Dichtlippe 6 eines Einsatzringes 7 und die äußere Dichtlippe 8 eines Einsatzringes 9 gebildet. Die an ihren Enden entgegengesetzt abgeschrägten Dichtlippen 6 und 8 bilden eine Kanalerweiterung 10 als Übergang zwischen dem Ringkanal 5 und einem Expansionsraum 11, der sich durch später erläuterte Abschrägungen in Fließrichtung noch einmal erweitert und dann im Kegelstück 12 wieder verengt.

Der Expansionsraum 11 ist radial durch zwei Ringkolben, einen inneren Ringkolben 13 und einen äußeren Ringkolben 14 begrenzt, die, wie die Dichtlippen 6 und 8, in in Fließrichtung divergierenden Schrägen 15 und 16 enden.

Das in Pfeilrichtung A durch 11 und 12 einströmende Material baut durch die in Fließrichtung konvergierenden, den Durchfluß stark verengenden Schrägen des Kegelstücks 12 einen Gegendruck auf, der, an den Schrägen 15,16 der Ringkolben 13,14 angreifend, diese nach oben in Pfeilrichtung B drückt.

Die Ringkolben sind über Stangen 17,18 mit einer Ringtraverse 19 verbunden, die über irgendeinen geeigneten Steuermechanismus 20 in Pfeilrichtung A zusammen abwärts bewegbar sind.

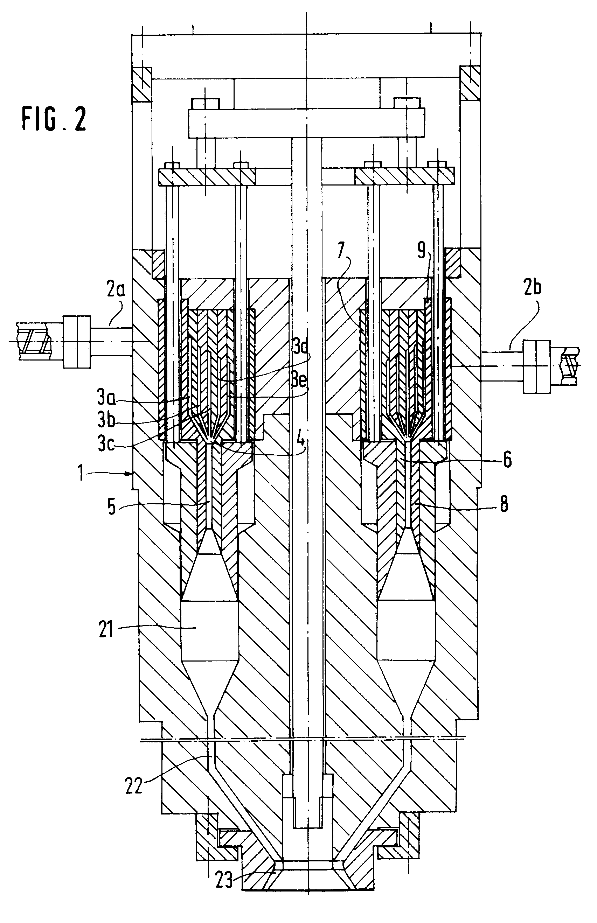

Wenn also das durch die Extruder 2 über die senkrechten Speisekanäle 3 eingespeiste Material im Ringkanal 5 zum Laminat geformt und sich im Expansionsraum 11 radial ausgedehnt hat, so hebt das Laminat, im Kegelstück 12 angekommen, die beiden Ringkolben 13 und 14 an, wodurch sich gemäß Fig. 2 ein Stauraum 21 bildet. Danach werden durch die Steuerung 20 über die Ringtraverse 19 und die Stangen 17 und 18 die Kolben 13,14 abgesenkt, die dann das Material aus dem Stauraum 21 über die Düsenleitung 22 durch die Düse 23 drücken, die es als schlauchförmiger Vorformling verläßt, der nach Größe und Gewicht für die Herstellung eines Stückes in einer geteilten Blasform paßt.

Durch die im mittleren Durchmesser des Stauraumes 21 erfolgende Einspeisung der nachfließenden, von den Extrudern geförderten Schichten und durch den sich daraus ergebenden Doppelringkolben 13,14 bleibt das laminar senkrecht geschichtete Material in seiner Struktur erhalten. Die Schichten werden zueinander zwar gestaucht, aber die prozentuale Schichtendickenverteilung bleibt, im Gegensatz zu einem Speicherkopf nach dem Stande der Technik mit innerer Einspeisung, erhalten. Bei diesem ist zwar ein Schichtenaufbau beim Füllen des Speichers oder Stauraumes ebenfalls zu erreichen, aber der beim Ausstoßvorgang in den Stauraum eintauchende Kolben schert den inneren Bereich des Laminatmaterials ab, und dieser abgescherte Bereich legt sich beim Füllvorgang parallel zur stirnseitigen Kegelmantelfläche des Ausstoßkolbens. Das bedeutet, daß die Laminatstruktur unterbrochen wird, bevor die durch die Speisekanäle 3 nachströmende Schmelze sich neu aufbauen kann. Die Folge ist, daß der ausgestoßene Schlauch aufgrund des abgescherten und damit fehlenden Anteils nicht dem gewünschten Aufbau entspricht. Der abgescherte Bereich zeigt keine geordnete Struktur und unterbricht im gespeicherten Material den gewünschten Schichtaufbau. Bei der Erfindung dagegen taucht der in einen äußeren und inneren Ring geteilte Kolben nicht im Sinne des Standes der Technik in den Stauraum ein, sondern greift sozusagen den Schichtaufbau zwischen den Schrägflächen 15 und 16 und schiebt ihn, ohne jede Scherung, beim Ausstoßvorgang vor sich her.

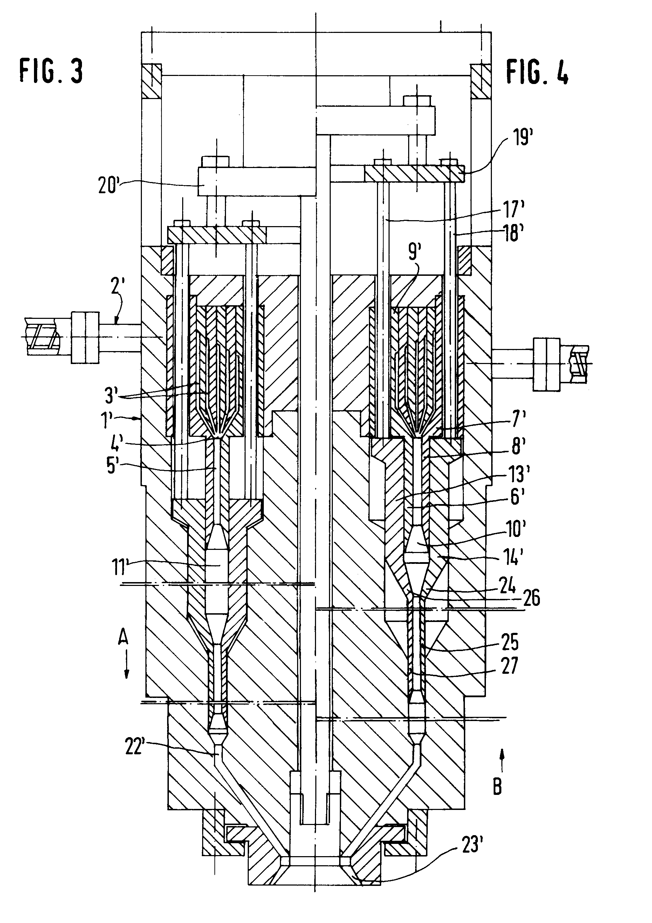

Die Ausführungsform des erfindungsgemäßen Speicherkopfes nach den Fig. 3 und 4 ist im wesentlichen gleich der nach den Fig. 1 und 2 aufgebaut und deshalb sind gleiche Teile mit einem gleichen, nur mit einem Beistrich hervorgehobenen Bezugszeichen gekennzeichnet. Auch in diesem Falle ist also der allgemein mit 1' bezeichnete Kopf für die Herstellung eines Laminats von bis zu fünf Schichten vorgesehen und weist hierzu fünf über den Umfang verteilte Extruder 2' auf, die das Material in getrennte, senkrecht verlaufende Speisekanäle 3' einspeisen, die an der das Laminat bildenden Stelle 4' zusammenlaufen. Das so gebildete Laminat durchströmt dann den Ringkanal 5', der durch die Dichtlippe 6' des Einsatzringes 7' und die Dichtlippe 8' des Einsatzringes 9' gebildet wird. Die Enden der Dichlippen 6' und 8' sind in Fließrichtung divergierend abgeschrägt und formen dadurch eine Erweiterung 10', an die sich ein Expansionsraum 11' anschließt. Auch im Falle dieser Ausführungsform wird der Expansionsraum 11' durch einen inneren Ringkolben 13' und einen äußeren Ringkolben 14' begrenzt und die Ringkolben sind über Stangen 17' und 18' mit einer Ringtraverse 19' verbunden, die durch eine Steuereinrichtung 20' in Achsrichtung des Speicherkopfes bewegbar ist. 22' ist die Düsenleitung und 23' die Düse.

Im Unterschied zur Ausführungsform nach den Fig. 1 und 2 setzt sich aber in diesem Falle der äußere Ringkolben 14' in ein Verjüngungsstück 24 fort, an das sich ein Dichtlippenring 25 anschließt und ebenso setzt sich der innere Ringkolben 13' in einem Verjüngungsstück 26 fort, an das sich ein Dichtlippenring 27 anschließt.

Das einströmende Material wird also nach der Bildung eines Laminats bei 4' in 5',10' und 11' zwischen 13' und 14' und zwischen 25 und 27 relativ weit in die Düsenleitung 22' und bis verhältnismäßig nahe an die Düse 23' zusammengehalten. Das in Pfeilrichtung A einströmende Material findet im Raum zwischen den Verjüngungsstücken 24 und 26 Widerstand und drückt damit die Ringkolbenanordnung 13',14' mit den Dichtlippenringen 25 und 27 nach unten in die in Fig. 3 gezeichnete Stellung. Ist diese Stellung erreicht, so wird die Ringkolbenanordnung 13'-24-25, 14', 26-27 durch die Steuerung über die Traverse 19' und die Stangen 17',18' in Pfeilrichtung B angehoben. Dadurch verkleinert sich der Raum 11' bis auf die in Fig. 4 dargestellte Größe und, da das Material nach oben nicht ausweichen kann, muß das Laminat in Pfeilrichtung A über die Düsenleitung 22' durch die Düse 23' ausgestoßen werden.

Das einströmende Material bleibt von der Stelle 4, an der das Laminat gebildet wird, bis über den Speicherraum hinaus zusammengefaßt, so daß seinen Schichtaufbau störende oder zerstörende Einflüsse nicht zu befürchten sind.

**Patentansprüche**

1. Speicherkopf für die Herstellung mehrschichtiger co-extrudierter Schläuche aus Kunststoff, die als Vorformlinge in geteilten Blasformen weiterverarbeitet werden, mit mehreren koaxial angeordneten von jeweils einem Extruder (2,2') gespeisten ringförmigen Speisekanälen (3,3'), die, jeweils eine Schicht des Schlauches bildend, in einem ein Laminat bildenden Ringkanal (5,5') münden, dadurch **gekennzeichnet**, daß der Ringkanal (5,5') zwischen den einander zugekehrten Wänden einer ringförmigen inneren Dichtlippe (6,6') und einer äußeren ringförmigen Dichtlippe (8,8') liegt, auf deren einander abgewandten Flächen für den Austrag des Laminats aus dem Speicherraum (21,11') ein innerer Ringkolben (13,13') und ein äußerer Ringkolben (14,14') gleitbar angeordnet sind.

2. Speicherkopf nach dem Anspruch 1, dadurch **gekennzeichnet**, daß der das Laminat bildende Ringkanal (5,5') mittig in den Ringraum (11, 11') zwischen den Ringkolben (13,13'-14,14') mündet.

3. Speicherkopf nach dem Anspruch 1, dadurch **gekennzeichnet,** daß jede Dichtlippe (6,6'-8,8') der sich in Fließrichtung fortsetzende Teil eines Einsatzringes (7,7' bzw. 9,9') ist, die zwischen sich einen die Speisekanäle (3,3') enthaltenden ringförmigen Block aufnehmen.

4. Speicherkopf nach dem Anspruch 1, dadurch **gekennzeichnet,** daß die Ringkolben (13,13'-14,14') über Steuerstangen (17,17'-18,18') mit einer Steuereinrichtung (19,19'-20,20') heb- und/oder senkbar verbunden sind.

5. Speicherkopf nach den Ansprüchen 1 bis 4, dadurch **gekennzeichnet,** daß die Ringkolben (13,14) in in Fließrichtung (A) divergierenden Schrägen (15,16) enden, die in der oberen Endlage der Ringkolben (13,14) entsprechende Endschrägen der Dichtlippen (6,8) fortsetzen und zusammen die obere Begrenzung des Speicherraumes (21) bilden.

6. Speicherkopf nach den Ansprüchen 1 bis 5, **gekennzeichnet** durch für den Austrag des im Speicherraum (21) befindlichen Kunststoffmaterials durch eine Düsenleitung (22) und Düse (23) abwärts bewegte Ringkolben (13,14).

7. Speicherkopf nach den Ansprüchen 1 bis 4, dadurch **gekennzeichnet,** daß die Ringkolben (13',14') sich in Dichtlippenringen (25,27) fortsetzen, die gegenüber den Ringkolben (13',14') einen geringeren, dem Innendurchmesser der Düsenleitung (22') angepaßten Außendurchmesser aufweisen und bei angehobenen Ringkolben (13',14') noch in die Düsenleitung (22') hineinreichen.

8.  Speicherkopf nach dem Anspruch 7, dadurch **gekennzeichnet,** daß der Speicherraum (11') durch die einander zugewandten Wände der Ringkolben (13',14') gebildet ist.

9.  Speicherkopf nach den Ansprüchen 7 und 8, **gekennzeichnet** durch für den Austrag des im Speicherraum (11') befindlichen Kunststoffmaterials durch die Düsenleitung (22') und Düse (23') aufwärts bewegbare Ringkolben (13',14').

## Claims

1.  An accumulator head for manufacturing multi-layer coextruded plastics tubes which are processed further as preforms in divided blow moulds, comprising several co-axially arranged, annular feed channels (3, 3') fed by an extruder (2, 2'), the feed channels each forming a layer of the tube and opening into an annular channel (5, 5') forming a laminate, characterised in that the annular channel (5, 5') is located between the facing walls of an annular inner sealing lip (6, 6') and an outer annular sealing lip (8, 8'), an inner annular plunger (13, 13') and an outer annular plunger (14, 14') being slidably arranged on their surfaces facing away from each other for the discharge of the laminate from the storage chamber (21, 11').

2.  An accumulator head according to claim 1, characterised in that the annular channel (5, 5') forming the laminate opens centrally into the annular space (11, 11') between the annular plungers (13, 13'-14, 14').

3.  An accumulator head according to claim 1, characterised in that each sealing lip (6, 6'-8, 8') is the part of an insert ring (7, 7' or 9, 9') continuing in the direction of flow, which between them receive an annular block containing the feed channels (3, 3').

4.  An accumulator head according to claim 1, characterised in that the annular plungers (13, 13'-14, 14') are connected to a control device (19, 19'-20, 20') via control rods (17, 17'-18, 18') such that they can be raised or lowered.

5.  An accumulator head according to claims 1 to 4, characterised in that the annular plungers (13, 14) end in chamfers (15, 16) diverging in the direction of flow (A), which chamfers continue corresponding end chamfers of the sealing lips (6, 8) in the upper end position of the annular plungers (13, 14) and together form the upper limit of the storage chamber (21).

6.  An accumulator head according to claims 1 to 5, characterised by annular plungers (13, 14) moved downwards for discharging the plastics material in the storage chamber (21) through a die conduit (22) and die (23).

7.  An accumulator head according to claims 1 to 4, characterised in that the annular plungers (13', 14') continue in sealing lip rings (25, 27) which in relation to the annular plungers (13', 14') have a smaller outer diameter adapted to the inner diameter of the die conduit (22') and which still extend into the die conduit (22') when the annular plungers (13', 14') are raised.

8.  An accumulator head according to claim 7, characterised in that the storage chamber (11') is formed by the facing walls of the annular plungers (13', 14').

9.  An accumulator head according to claims 7 and 8, characterised by upwardly movable annular plungers (13', 14') for discharging the plastics material in the storage chamber (11') through the die conduit (22') and die (23').

## Revendications

1.  Tête à accumulation pour la fabrication de tubes souples à plusieurs couches co-extrudés en matière plastique, qui sont ensuite travaillés en tant que préformes dans des moules de soufflage en plusieurs parties, comportant plusieurs canaux d'alimentation (3, 3') coaxiaux, alimentés chacun par une extrudeuse (2, 2'), qui en formant chaque fois une couche du tuyau, débouchent dans un canal annulaire (5, 5') formant un laminat, caractérisé en ce que le canal annulaire (5, 5') est situé entre les parois tournées l'une vers l'autre d'une lèvre d'étanchéité intérieure (6, 6') annulaire et d'une lèvre d'étanchéité extérieure (8, 8') annulaire, sur les faces opposées desquelles un piston annulaire intérieur (13, 13') et un piston annulaire extérieur (14, 14') sont montés coulissants pour l'évacuation du laminat hors de la chambre d'accumulation (21, 11').

2.  Tête à accumulation selon la revendication 1, caractérisée en ce que le canal annulaire (5, 5') formant le laminat débouche au centre de la chambre annulaire (11, 11'), entre les pistons annulaires (13, 13'; 14, 14').

**3.** Tête à accumulation selon la revendication 1, caractérisée en ce que chaque lèvre d'étanchéité (6, 6'; 8, 8') est le prolongement dans la direction d'écoulement d'une bague rapportée (7, 7' ou 9, 9') qui entourent entre eux un bloc annulaire contenant les canaux d'alimentation (3, 3').

**4.** Tête à accumulation selon la revendication 1, caractérisée en ce que les pistons annulaires (13, 13'; 14, 14') sont reliés avec possibilité de déplacement vers le haut et/ou vers le bas à un dispositif de commande (19, 19'; 20, 20') par l'intermédiaire de tiges de commande (17, 17'; 18, 18').

**5.** Tête à accumulation selon les revendications 1 à 4, caractérisée en ce que les pistons annulaires (13, 14) se terminent par des surfaces inclinées (15, 16) divergentes dans la direction d'écoulement (A) qui, lorsque les pistons (13, 14) sont en position supérieure extrême, prolongent des surfaces inclinées correspondantes des extrémités des lèvres d'étanchéité (6, 8) et forment avec elles la limite supérieure de la chambre d'accumulation (21).

**6.** Tête à accumulation selon les revendications 1 à 5, caractérisée en ce que, pour l'évacuation à travers un conduit de filière (22) et une filière (23) de la matière plastique se trouvant dans la chambre d'accumulation (21), les pistons (13, 14) se déplacent vers le bas.

**7.** Tête à accumulation selon les revendications 1 à 4, caractérisée en ce que les pistons (13', 14') se prolongent par des lèvres d'étanchéité annulaires (25, 27) qui présentent un diamètre extérieur plus faible par rapport aux pistons annulaires (13', 14'), adapté au diamètre intérieur du conduit de filière (22') et qui pénètrent encore dans le conduit de filière (22') lorsque les pistons annulaires (13', 14') sont en position rentrée.

**8.** Tête à accumulation selon la revendication 7, caractérisée en ce que la chambre d'accumulation (11') est formée par les parois tournées l'une vers l'autre des pistons annulaires (13', 14').

**9.** Tête à accumulation selon les revendications 7 et 8, caractérisée par des pistons annulaires (13', 14') qui peuvent se déplacer vers le haut pour refouler à travers le conduit de filière (22') et la filière (23') la matière plastique qui se trouve dans la chambre d'accumulation (11').

FIG.1

FIG. 2

FIG. 3

FIG. 4